# EUROPEAN PATENT APPLICATION

(11) **EP 4 704 036 A1**
(43) Date of publication of application: **04.03.2026**
(21) Application number: 24306428.4
(22) Date of filing: 02.09.2024
(51) Int. Cl.: G06T 9/00, G06T 15/04, H04N 19/70

(54) **MULTIPLE UV COORDINATES FOR SCENE DESCRIPTION**

(71) Applicant: InterDigital CE Patent Holdings, SAS, 75017 Paris (FR)
(72) Inventor: AVRIL, Quentin, 35830 BETTON (FR); GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR)
(74) Representative: Vossius & Partner Patentanwälte Rechtsanwälte mbB

(57) **Abstract**

In a scene decoding method according to some embodiments, a first list is obtained that includes a first index for each vertex of each face in a mesh. A second list is obtained that includes, for each value of the first indices, a respective first set of coordinates of a first corresponding point in a first UV space. Based on the first list and the second list, a first mapping is determined of each of the vertices of each face in the mesh to at least one of the first sets of coordinates in the first UV space. The mesh is rendered using the first mapping to apply a first texture to the mesh.

## Description

### BACKGROUND

The present application is related to 3D digital representation and more specifically to the texturing of 3D meshes.

The current MPEG-I Scene Description (SD) format is described in ISO/IEC DIS 23090-14:2021(E) Information technology - Coded representation of immersive media - Part 14: Scene description for MPEG media: FDIS comments. The format allows for the storage of several digital representations such as 3D meshes.

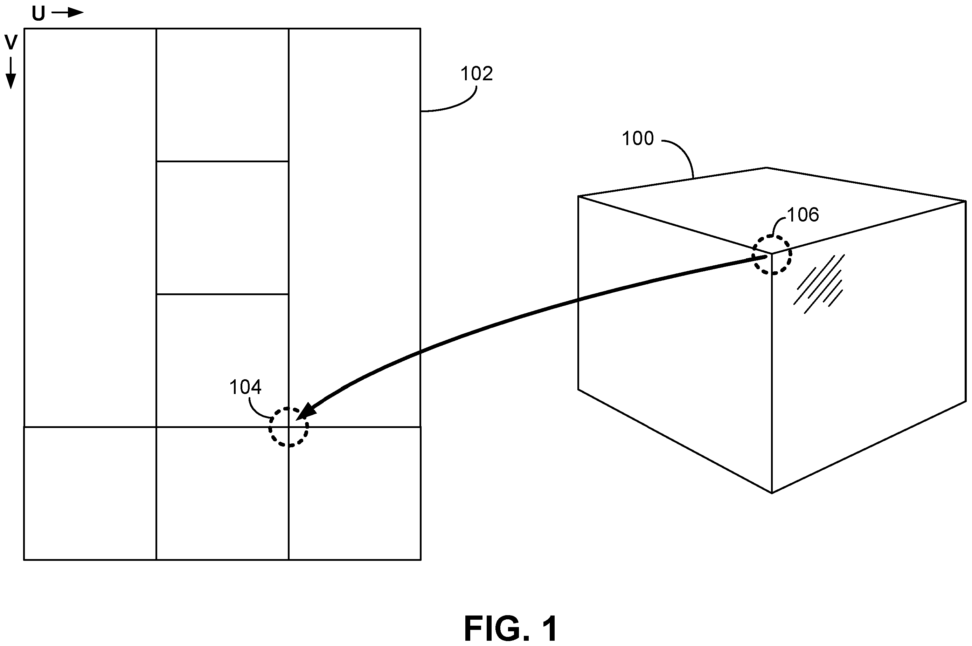

In such meshes, the texturing is based on the technique of UV mapping where each 3D vertex has a corresponding 2D texture coordinate as illustrated in FIG. 1. FIG. 1 illustrates a 3D cube 100 and a corresponding UV space 102. The UV space can be seen as a flattening of the square faces in 2D. A vertex 106 on the 3D cube links to a single texture coordinate 104 in the UV space.

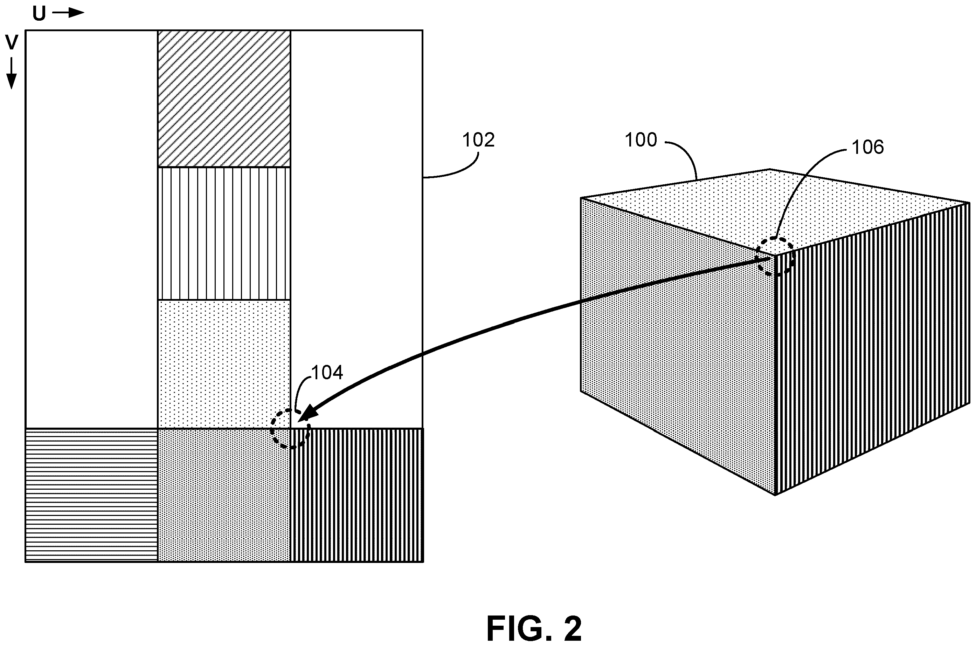

FIG. 2 illustrates how an image in UV coordinates is mapped to the 3D cube using texture coordinates defined in the UV space. UV mapping can be slightly more complex while integrating the concept of multiple texture coordinates. For example, a single 3D vertex can be mapped to multiple 2D texture coordinates.

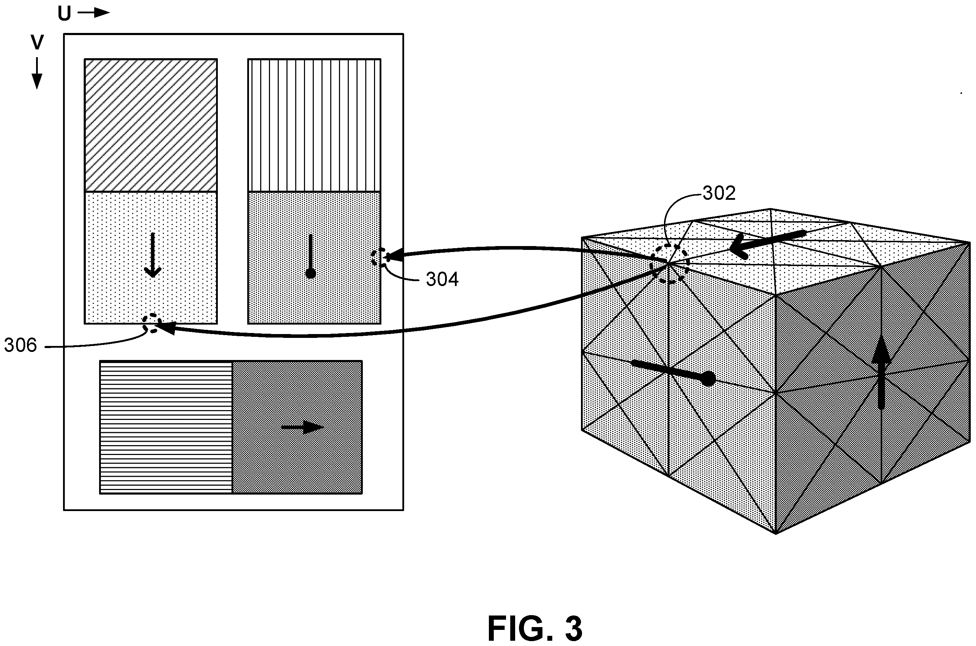

FIG. 3 is an example of multiple UV texture coordinates. A single 3D vertex 302 on a 3D mesh maps to two different UV points as indicated at 304 and 306. As the mesh has been cut into several independent pieces to optimize the coverage of the image space, vertices on seams have two different UV coordinates.

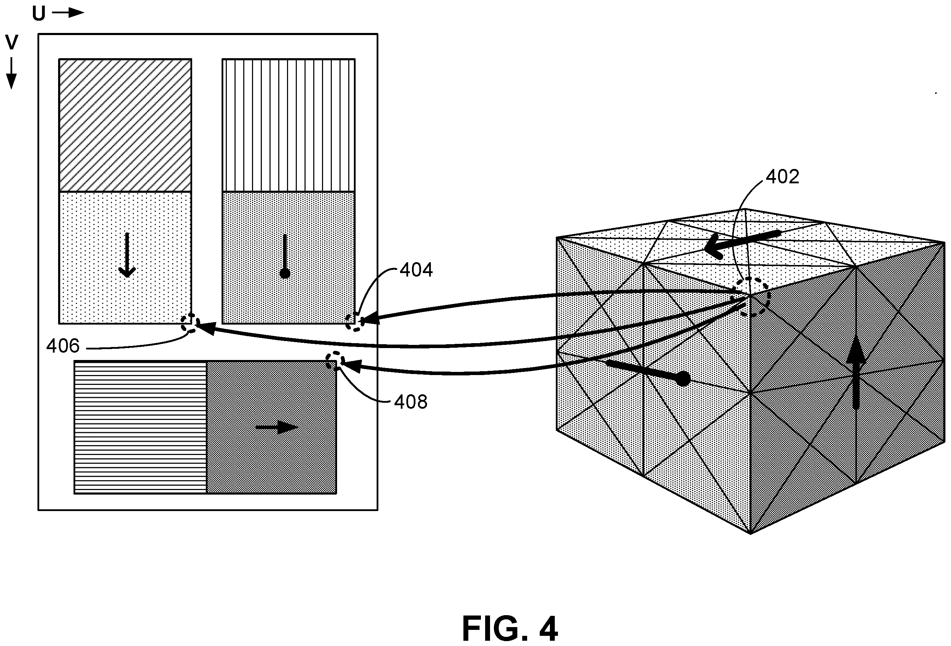

There is no limit for the number of texture coordinates. FIG. 4 illustrates one 3D vertex 402 with three different texture coordinates, shown at 404, 406, and 408.

### SUMMARY

Briefly stated, in one embodiment, a decoding method is provided comprising: obtaining a first list that includes a first index for each vertex of each face in a mesh; obtaining a second list that includes, for each value of the first indices, a respective first set of coordinates of a first corresponding point in a first UV space; based on the first list and the second list, determining a first mapping of each of the vertices of each face in the mesh to at least one of the first sets of coordinates in the first UV space; and rendering the mesh using the first mapping to apply a first texture to the mesh.

A decoding apparatus according to some embodiments comprises one or more processors configured to perform at least: obtaining a first list that includes a first index for each vertex of each face in a mesh; obtaining a second list that includes, for each value of the first indices, a respective first set of coordinates of a first corresponding point in a first UV space; based on the first list and the second list, determining a first mapping of each of the vertices of each face in the mesh to at least one of the first sets of coordinates in the first UV space; and rendering the mesh using the first mapping to apply a first texture to the mesh.

Some embodiments further comprise obtaining a first data structure, wherein the first data structure includes a first accessor index identifying the first list and a second accessor index identifying the second list.

Some embodiments further comprise obtaining a third list that includes a second index for each vertex of each face in the mesh; obtaining a fourth list that includes, for each value of the second indices, a respective second set of coordinates of a second corresponding point in a second UV space; and based on the third list and the fourth list, determining a second mapping of each of the vertices of each face in the mesh to at least one of the second sets of coordinates in the second UV space; wherein rendering the mesh includes using the second mapping to apply a second texture to the mesh.

Some embodiments further comprise obtaining a second data structure, wherein the second data structure includes a third accessor index identifying the third list and a fourth accessor index identifying the fourth list.

In some embodiments, the first texture and the second texture are different types of texture.

In some embodiments, the first texture is a base color texture, a normal texture, or a displacement texture.

In some embodiments, at least two of the first indices in the first list have a same value thereby identifying a same first set of coordinates.

An encoding method according to some embodiments comprises: obtaining information indicating, for each vertex of each face in a mesh, a respective first set of coordinates of a first corresponding point in a first UV space; encoding a first list that includes, for each of the first corresponding points in the first UV space, the first set of coordinates of the respective point; and encoding a second list that includes, for each of the vertices of each of the faces in the mesh, a first index identifying the corresponding first set of coordinates in the first list.

An encoding apparatus according to some embodiments comprises one or more processors configured to perform at least: obtaining information indicating, for each vertex of each face in a mesh, a respective first set of coordinates of a first corresponding point in a first UV space; encoding a first list that includes, for each of the first corresponding points in the first UV space, the first set of coordinates of the respective point; and encoding a second list that includes, for each of the vertices of each of the faces in the mesh, a first index identifying the corresponding first set of coordinates in the first list.

Some embodiments further comprise encoding a first data structure, wherein the first data structure includes a first accessor index identifying the first list and a second accessor index identifying the second list.

Some embodiments further comprise: obtaining information indicating, for each vertex of each face in a mesh, a respective second set of coordinates of a second corresponding point in a second UV space; encoding a third list that includes, for each of the second corresponding points in the second UV space, the second set of coordinates of the respective point; and encoding a fourth list that includes, for each of the vertices of each of the faces in the mesh, a second index identifying the corresponding second set of coordinates in the second list.

Some embodiments further comprise encoding a second data structure, wherein the second data structure includes a third accessor index identifying the third list and a fourth accessor index identifying the fourth list.

In some embodiments, the first texture and the second texture are different types of texture.

In some embodiments, at least two of the first indices in the second list have a same value thereby identifying a same first set of coordinates.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 illustrates a basic UV mapping example on a cube mesh, in which one 3D vertex is linked to one texture coordinate.
FIG. 2 illustrates a basic UV mapping with an image as texture on a cube.
FIG. 3 illustrates a multi-UV example, in which one 3D vertex has two texture coordinates.
FIG. 4 illustrates another multi-UV example, in which one 3D vertex has three texture coordinates.
FIG. 5 illustrates an object to be represented by a textured mesh according to an example embodiment.
FIG. 6 illustrates a mesh and two corresponding textures according to an example embodiment.
FIG. 7 illustrates a mesh and two corresponding textures according to an example embodiment, showing application of the textures to the mesh.
FIG. 8 is a flow diagram illustrating parsing of a MeshPrimitive data structure according to an example embodiment.
FIG. 9 is a flow diagram illustrating parsing of a uvSet data structure according to an example embodiment.
FIG. 10 illustrates data structures used for texture encoding and decoding according to an example embodiment.
FIG. 11 illustrates relationships among data structures used for texture encoding and decoding according to an example embodiment.
FIG. 12 is a functional block diagram illustrating an apparatus on which example embodiments may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

This disclosure describes examples of how to define and encode multiple texture coordinates (also referred to herein as UV coordinates) for a single vertex on a 3D mesh in a Scene Description format, such as the glTF format. For the purposes of illustration, example embodiments are described here using a format that is compliant with MPEG-I SD. However, the principles disclosed herein are not limited to the use of this format or any particular format.

Principles described in present disclosure may be used in the context of, for example, an application relying on MPEG-I-SD that allows users to represent 3D scenes and interact with them. Users may want to use multi-UV texturing for the 3D meshes. To do so, today, the glTF format allows one to represent and encode multi-UV texture use the TEXCOORD_n primitive attribute which allows one to define multiple texture coordinates. However, this results in a large duplication of data (as texture coordinates are stored in the TEXCOORD_n accessor which only supports per-vertex texture coordinates). In addition, it calls for the client application to determine whether a vertex has multiple texture coordinates or not.

In the current description, the proposed format follows the glTF format and is compatible with the recent MPEG-I-SD effort to extend glTF with MPEG-I SD extensions. However, its meaning and use are generic and can be coded in other formats, such as (XML, USD, and the like).

Example embodiments may be implemented by incorporating modifications such as the following to the glTF specification, or by adding analogous features to other specifications:
- "MPEG_primitive_multiuv" may be added as an extension of the primitive property with the following properties:
   ∘ a new property "uvSets" to store multiple UV sets within the "MPEG_primitve_multiuv" extension.
      ▪ a new property "name" to store name of the UV set.
      ▪ a new property "indices" to store texture coordinates indices.
      ▪ a new property "coords" to store texture coordinates.

In an example embodiment, the extension "MPEG_primitve_multiuv" is provided as extension of the primitive property. When "MPEG_primitve_multiuv" is defined, its property may be described as follows.

| **Name** | **Type** | **Description** | **New** |
|---|---|---|---|
| uvSets | UVset [1-*] | List of UV set definitions. | Yes |

The "uvsets" property contains a list of UVset, each one defining a new set of UVs.

Items in "uvsets" can be referenced in the glTF using their index in the list, or their name (e.g., the "name" property in UVset). For example, if "uvsets" has three items, then a value of 1 in another property in the file corresponds to the second item in the "uvsets" list.

In an example embodiment, a UVset has the following properties.

| **Name** | **Type** | **Description** | **Req.** |
|---|---|---|---|
| name | string | The name of the UV set | No |
| description | string | The description of the UV set | No |
| purpose | string | The purpose of the UV set | No |
| indices | integer | References an item in the "accessors" collection. The referenced item may be a list of UV indices (integers). These indices refer to the below coords property. | Yes |
| coords | integer | List of references in the "accessors" collection. The accessor defines a list of 2D float coordinates corresponding to UV coordinates. | Yes |

In this and other syntax examples described herein, an indication that an element is "required" does not mean that the element is required in all embodiments, but rather that the element needs to be present for conformity with the particular example syntax. An element that is "required" in some embodiments may not be required in a syntax used in other embodiments.

In this example, the "name" property is a string that defines the name of the UVset. It can be used for indexing, e.g., to retrieve the UV set knowing its name.

The "description" property is a string that describes the UV set. It can be used, for example, in a user interface.

The "purpose" property is a string that defines the purpose of the UV set. It can be an information to its usage, such as "Normals" which would mean that these coordinates are mostly used for normal texture or "Displace" for displacement texture etc.

The "indices" property refers an accessor to a list of UV indices represented as integers. These indices refer to the coords list. The number of UV indices is selected to be compatible with the topology type used. For example, where a triangular topology is used, the number of UV indices is divisible by 3 and is non-zero. As described below, a possible embodiment of this disclosure would be to use polygon type as topology, as described in EP Patent Application No. 24305540.7, filed 5 April 2024, entitled "Polygons Encoding in Scene Descriptions."

The "coords" property refers an accessor to a list where each item is a pair of 2D texture coordinates (U, V) represented as float values between 0 and 1.

In example embodiments, client implementations ignore the "TEXCOORD_0" attribute of "attributes" when parsing the "MPEG_primitve_multiuv" extension. It overwrites the texture coordinate system allowing the use of multi-uv texturing.

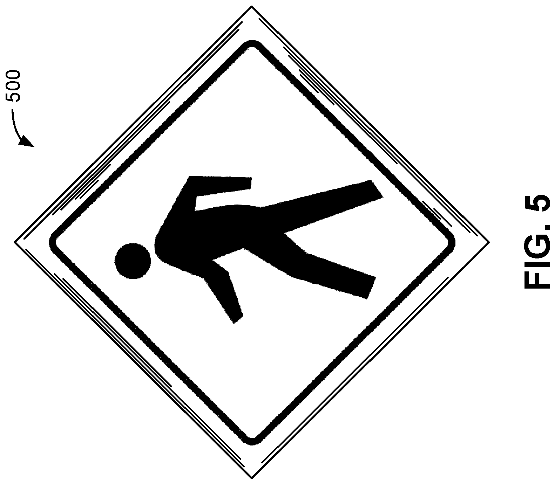

As an example, FIG. 5 illustrates an object 500 that may be represented by a mesh in some embodiments. In this example, the object is a diamond-shaped road sign with slightly curved edges (represented here schematically by shading lines).

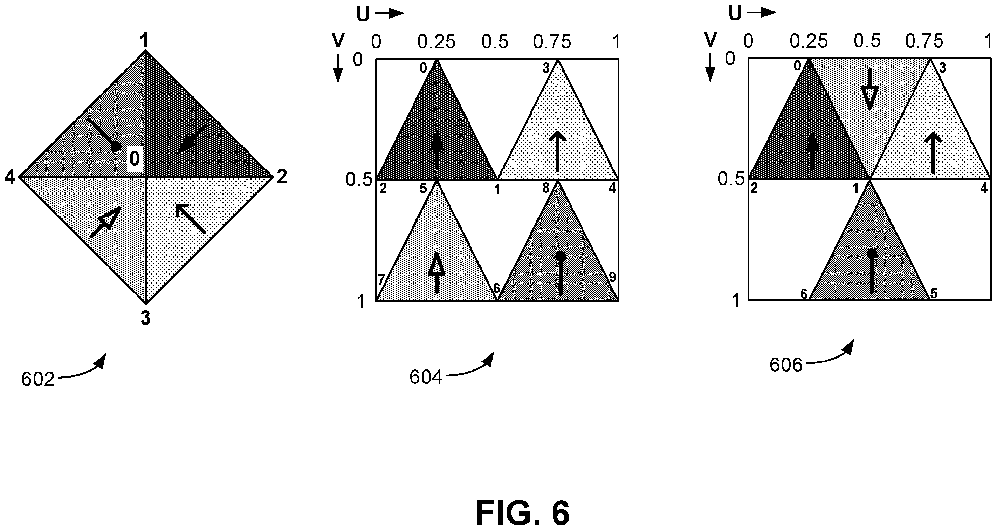

In an example embodiment, as illustrated in FIG. 6, the object may be represented using a four-triangle mesh 602. The mesh includes five vertices, numbered 0, 1, 2, 3, and 4. The base colors (diffuse texture) on the road sign in this example may be represented by a first texture image 604, and the surface normal on the road sign may be represented by a second texture image 606.

In an example embodiment, the mapping between the different texture images 604 and 606 may be represented and encoded using an extension such as "MPEG_primitive_multiuv".

As illustrated in FIG. 6, each triangle is represented with a different level of shading and with a different arrow type to distinguish among the different triangles and their different orientations. In the example, there are two UV sets, the first set for mapping a diffuse texture (e.g. base color) 604 and the second set to use as a normals 606.

The first UV set 604 (which may be a UVset in an extension as described herein) may include (or may reference, e.g. through an accessor) information such as a list of indices and a list of UV coordinates. In the example of FIG. 6, the list of indices for UV set 604, which may be obtained through the "indices" property may be as follows:
0, 1, 2, 3, 4, 1, 5, 6, 7, 8, 9, 6

These indices may be interpreted according to the geometry of the mesh (e.g. according to an ordering of mesh vertices) as follows:

| **Triangle** | **Mesh Vertices** | **Texture Coordinate (UV) indices from the "indices" property** |
|---|---|---|
| Top Right | 0 | 0 |
| | 1 | 1 |
| | 2 | 2 |
| Bottom Right | 0 | 3 |
| | 2 | 4 |
| | 3 | 1 |
| Bottom Left | 0 | 5 |
| | 3 | 6 |
| | 4 | 7 |
| Top Left | 0 | 8 |
| | 4 | 9 |
| | 1 | 6 |

The value of the texture coordinate (UV) indices from the "indices" property is the index of one of the coordinates in a list "coords", which may also be provided (directly or by reference) as a property of a UVset. For example, "coords" may be a list such as the following.
(0.25,0), (0.5,0.5), (0,0.5), (0.75,0), (1,0.5), (0.25,0.5), (0.5,1), (0,1), (0.75,0.5), (1,1)

In this example, ten texture coordinates (indexed by 0 through 9) are used to correctly map the texture to the mesh. For the sake of illustration, the index of each coordinate is provided on UV map 604. Each texture coordinate index from the "indices" property identifies one of these texture coordinates from the "coords" property. Thus, combining this information together, the UV coordinates of each vertex in the mesh may be determined as follows.

| **Triangle position in mesh** | **Mesh Vertices** | **Texture Coordinate (UV) indices from the "indices" property of first UV set** | **UV coordinate identified from the "coords" property of first UV set** |
|---|---|---|---|
| Top Right | 0 | 0 | (0.25, 0) |
| | 1 | 1 | (0.5, 0.5) |
| | 2 | 2 | (0, 0.5) |
| Bottom Right | 0 | 3 | (0.75, 0) |
| | 2 | 4 | (1, 0.5) |
| | 3 | 1 | (0.5, 0.5) |
| Bottom Left | 0 | 5 | (0.25, 0.5) |
| | 3 | 6 | (0.5, 1) |
| | 4 | 7 | (0, 1) |
| Top Left | 0 | 8 | (0.75, 0.5) |
| | 4 | 9 | (1, 1) |
| | 1 | 6 | (0.5, 1) |

In this example, 10 texture coordinates are used to correctly map the texture to the mesh. It may be noted that vertex 0 has four different texture coordinates (of indices 0, 3, 5 and 8), and two texture coordinates (of indices 1 and 6) are shared by at least two vertices.

In this example, a second UVset is used to provide normals. For example the "indices" property of this second UVset may provide the following information:
0, 1, 2, 3, 4, 1, 1, 0, 3, 1, 5, 6
and the "coords" property may provide the following information:
(0.25,0), (0.5,0.5), (0,0.5), (0.75, 0), (1, 0.5), (0.75,1), (0.25, 1)

Together, this information from the second UV set may be interpreted as described above into the following mapping.

| **Triangle position in mesh** | **Mesh Vertices** | **Texture Coordinate (UV) indices from the "indices" property of second UV set** | **UV coordinate identified from the "coords" property of second UV set** |
|---|---|---|---|
| Top Right | 0 | 0 | (0.25, 0) |
| | 1 | 1 | (0.5, 0.5) |
| | 2 | 2 | (0, 0.5) |
| Bottom Right | 0 | 3 | (0.75, 0) |
| | 2 | 4 | (1, 0.5) |
| | 3 | 1 | (0.5, 0.5) |
| Bottom Left | 0 | 1 | (0.5, 0.5) |
| | 3 | 0 | (0.25, 0) |
| | 4 | 3 | (0.75, 0) |
| Top Left | 0 | 1 | (0.5, 0.5) |
| | 4 | 5 | (0.75,1) |
| | 1 | 6 | (0.25, 1) |

For the sake of illustration, the index of each coordinate is provided on UV map 606. In this example, seven texture coordinates are used to correctly map the second texture to the mesh. Vertex 0 has three different texture coordinates (of indices 0, 3 and 1). Three texture coordinates (of indices 0, 1 and 3) are shared by at least two vertices. The texture coordinate of index 1 is used four times.

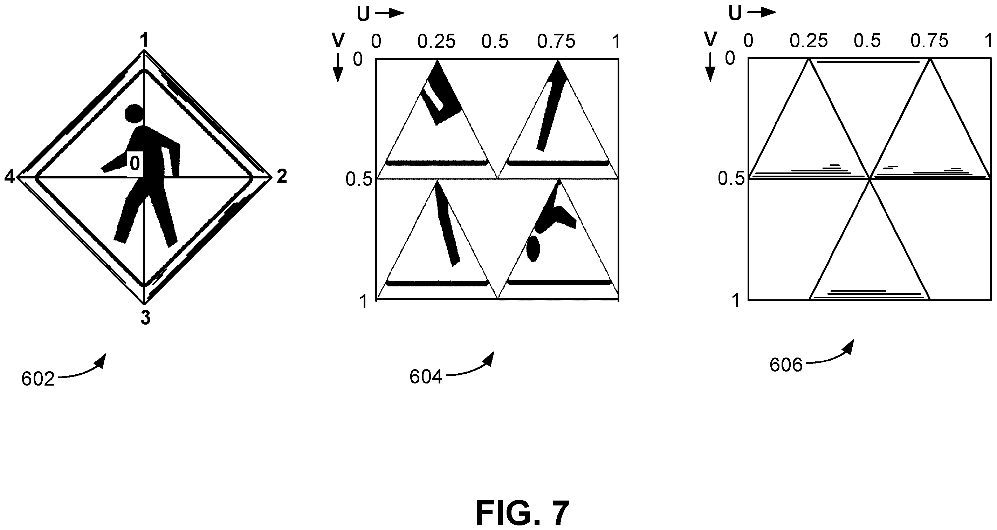

FIG. 7 represents how the first UV image 604 (e.g. color) and the second UV image 606 (e.g. normals) are mapped onto the mesh 602 to form a representation of the desired object 500 of FIG. 5.

In some embodiments, the accessors of indices may be tuples, as described in EP Patent Application No. 24305540.7, filed 5 April 2024, entitled "Polygons Encoding in Scene Descriptions." This enables the use of meshes made of faces with any edge count (e.g., polygons).

While the above example uses a first UV image for color and a second UV image for normals, it should be noted that the embodiments disclosed herein are not limited to any particular number of UV images or to any particular attributes being encoded in those images. For example, example embodiments can make use of UV images that represent features such as displacement, opacity, reflectivity, or other attributes.

The above example may be encoded using glTF code such as the following, which makes use of the extension of the extension "MPEG_primitve_multiuv". This code represents a mesh made of four triangles on which two textures (e.g. diffuse and normal) are applied using multiple-UV according to embodiments described herein.

```
 {
  "scene": 0,
  "scenes": [
    {
       "nodes": [0]
    }
  ],
  "nodes": [
    {
       "mesh": 0
    }
  ],
  "meshes": [
    {
       "primitives": [
          {
             "attributes":
               {
                 "POSITION": 0,
                 "NORMAL" : 1,
                 "TEXCOORD_0" : 2
               },
             "indices": 3,
             "extensions":
                {
                  "MPEG_primitive_multiuv": {
                       "uvSets": [
                         {
                            "name": "Diffuse_UV",
                            "indices": 4,
                            "coords": 5
                        },{
                            "name": "Normals_UV",
                            "indices": 6,
                            "coords": 7
                        }]
                }
           }
       ]
    }
  ],
  "textures" : [...],
  "images" : [...],
  "buffers": [...],
  "bufferviews": [...],
  "accessors": [...]
 }
```

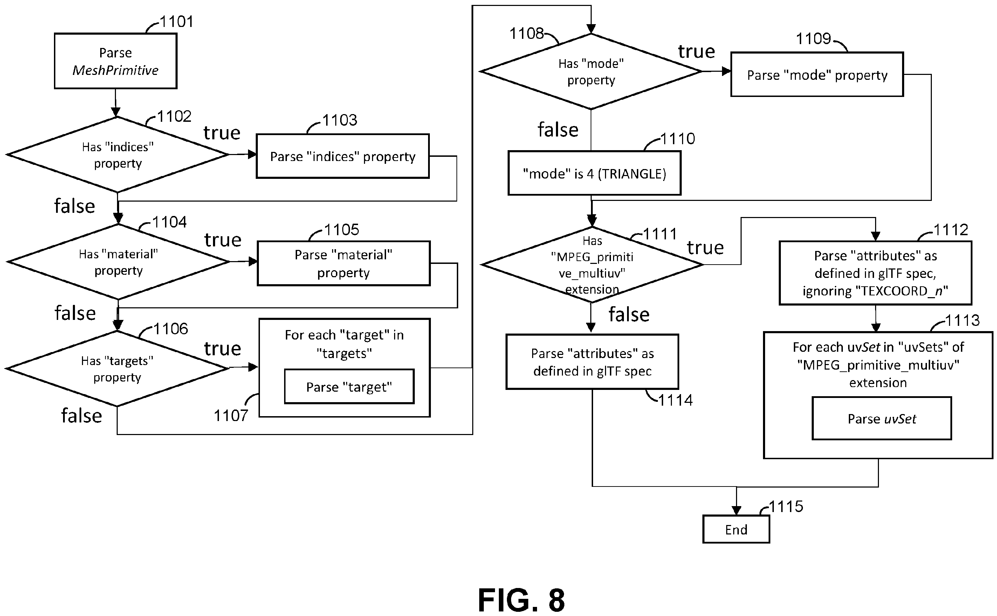

FIG. 8 is a flow diagram showing the parsing of a mesh primitive property according to some embodiments. The parsing 1101 may be performed every time a mesh primitive is being processed in the glTF file. At 1102, 1103, if the "indices" property is present, then it is parsed. The value of "indices" may be constrained to be the index of an existing item in the "accessor" root list. At 1104, 1105, if the "material" property is present, then it is parsed. The value of "material" may be constrained to be the index of an existing item in the "materials" root list. At 1106, 1107, if the "targets" property is present, each item of "targets" is parsed. At 1108, 1109, 1110, if the "mode" property is present, it is parsed. Otherwise, its default value may be 4 (corresponding to TRIANGLE). At 1111, 1112, 1113, 1114, if the "MPEG_primitive_multiuv" extension is present (1111), the "attributes" property of the primitive is parsed, ignoring the keys "TEXCOORD_n" (1112), and each item of the "uvSets" property of the "MPEG_primitive_multiuv" are parsed (1113). If the "MPEG_primitive_multiuv" extension is not present, then the "attributes" property is parsed as usual (1114). At 1115, parsing ends with success.

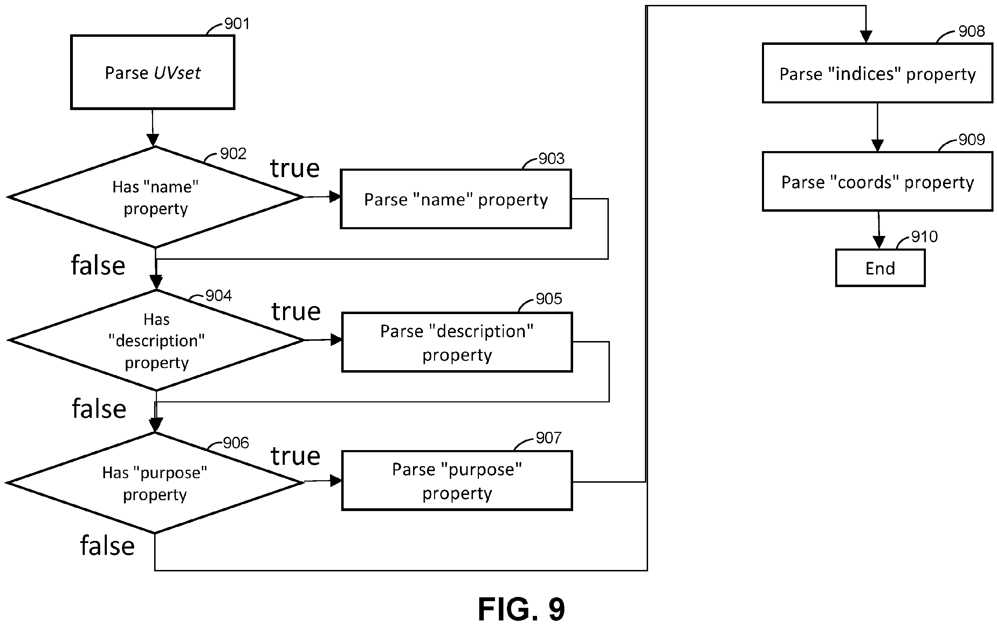

FIG. 9 is a flow diagram showing the parsing of a UVset property. This process 901 may be performed every time a UVset is being processed in the glTF file. At 902, 903, if the "name" property is present, then it is parsed. At 904, 905, if the "description" property is present, then it is parsed. At 906, 907, if the "purpose" property is present, then it is parsed. At 908, the "indices" property is parsed. The value of "indices" may be constrained to be the index of an existing item in the "accessor" root list. At 909, the "coords" property is parsed. The value of "coords" may be constrained to be the index of an existing item in the "accessor" root list. At 910, parsing ends with success.

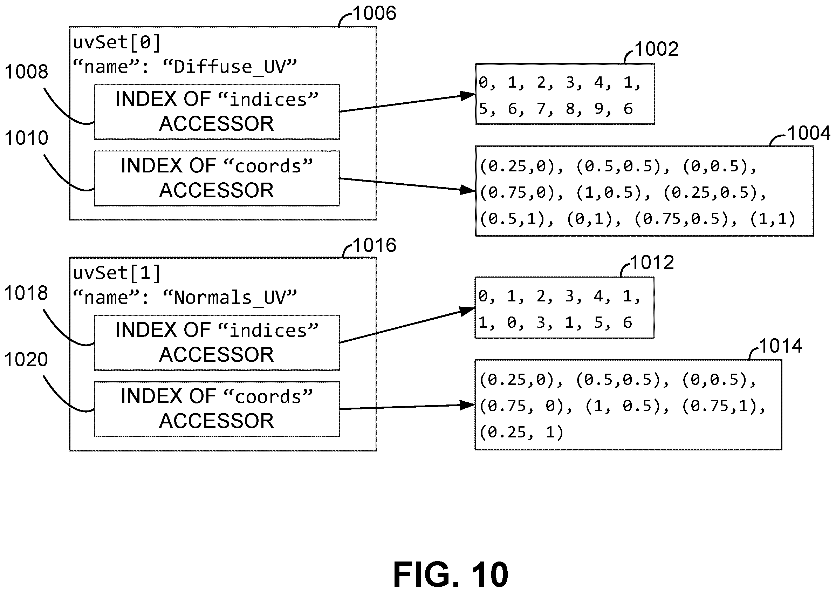

FIG. 10 schematically illustrates data used in example embodiments and relationships among elements of that data. In an example embodiment of a decoding method, as described with respect to FIG. 10, a list 1002 is obtained that includes an index for each vertex of each face in a mesh (in this example, the four-triangle mesh 602 of the above examples). The indices may be arranged in an order determined, for example, by a decoding order of the triangles in the mesh. For example, where the mesh geometry is decoded into a corner table, the indices may be arranged in the same order as the corner table, with each corner corresponding to one vertex of one face. In this example, there are four faces with three vertices each, so twelve indices are included in the list 1002.

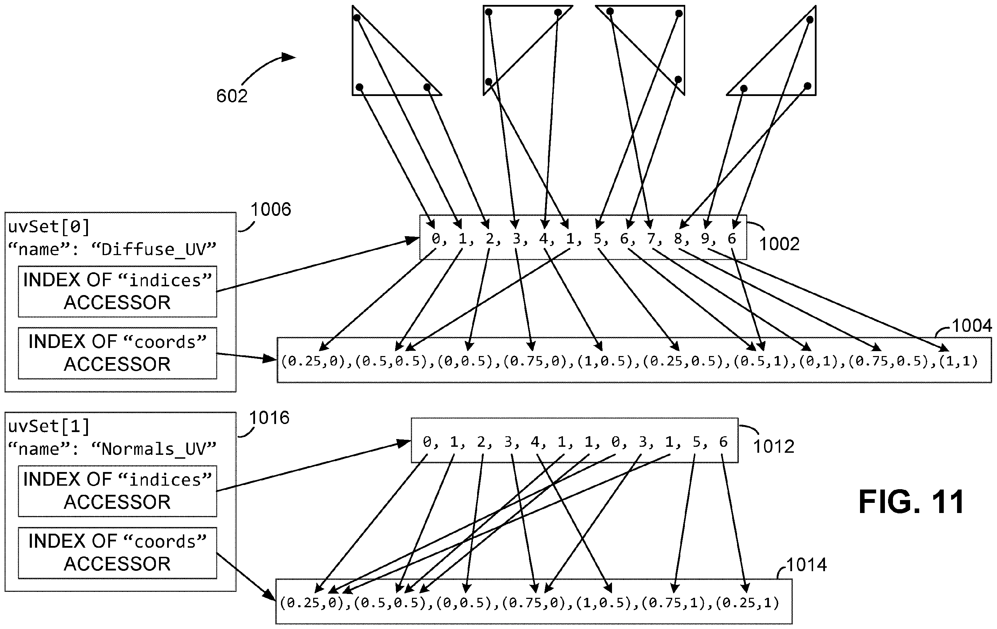

Another list 1004 is obtained that includes, for each value of the first indices, a respective set of coordinates of a first corresponding point in a first UV space. In this example, the values of the indices 1002 range from zero to nine, so there are ten sets of coordinates in list 1004. Based on lists 1002 and 1004, a first mapping is determined between each of the vertices of each face in the mesh to at least one of the sets of coordinates in the first UV space. An example of such a mapping is illustrated in FIG. 6 and further in FIG. 11 described below. The mesh is rendered using the mapping to apply a texture to the mesh, as shown for example with the application of the diffuse texture 604 in FIG. 7.

Some embodiments include a decoding apparatus comprising one or more processors configured to perform a decoding method as described herein.

Some embodiments include obtaining a first data structure 1006 (e.g. a "uvSet" structure), wherein the first data structure includes a first accessor index 1008 (e.g. the "indices" property) identifying the list 1002 and a second accessor index 1010 (e.g. the "coords" property) identifying the list 1004.

Some embodiments further include obtaining a list 1012 that also includes an index for each vertex of each face in the mesh, and obtaining a list 1014 that includes, for each value of the indices 1012, a respective set of coordinates of a corresponding point in a second UV space. In the illustrated example, the indices in list 1012 have values ranging from zero to six, so seven sets of coordinates a provided in list 1014. Based on lists 1012 and 1014, a second mapping is determined of each of the vertices of each face in the mesh to at least one of the second sets of coordinates in the second UV space. In such embodiments, rendering the mesh includes using the second mapping to apply a second texture to the mesh, as shown for example with the application of the normal texture 606 in FIG. 7.

Some embodiments further include obtaining a second data structure 1016 (e.g. a "uvSet" structure), wherein the second data structure includes an accessor index 1018 (e.g. the "indices" property) identifying the list 1012 and another accessor index 1020 (e.g. the "coords" property) identifying the list 1014.

In some embodiments, as described above, the first texture and the second texture may be different types of texture. For example, the first texture may be a base color texture, a normal texture, or a displacement texture, and the second texture may be a different one of those type of textures or a different type of texture altogether.

In some embodiments, at least two of the indices in a list of indices have the same value. For example, two of the indices in list 1002 have the value "1", and two of the indices have the value "6". Similarly, four of the indices in list 1012 have the value "1", two have the value "0", and two have the value "3". As a result, more that one entry in a list of indices identifies the same set of coordinates, so the number of sets of coordinates that are signaled is smaller than the number of vertices of the faces.

In an example encoding method, also described with reference to FIG. 10, information is obtained indicating, for each vertex of each face in a mesh, a respective first set of coordinates of a first corresponding point in a first UV space. Such information may take the following form, or any of a number of alternative forms.

| **Triangle number** | **Corner Number** | **Mesh Vertex** | **Coordinate in UV space** |
|---|---|---|---|
| 0 | 0 | 0 | (0.25, 0) |
| | 1 | 1 | (0.5, 0.5) |
| | 2 | 2 | (0, 0.5) |
| 1 | 3 | 0 | (0.75, 0) |
| | 4 | 2 | (1, 0.5) |
| | 5 | 3 | (0.5, 0.5) |
| 2 | 6 | 0 | (0.25, 0.5) |
| | 7 | 3 | (0.5, 1) |
| | 8 | 4 | (0, 1) |
| 3 | 9 | 0 | (0.75, 0.5) |
| | 10 | 4 | (1, 1) |
| | 11 | 1 | (0.5, 1) |

Using this information, a list 1004 is encoded that includes, for each of the first corresponding points in the first UV space, the first set of coordinates of the respective point. It may be noted in the example of list 1004 that, for the sake of efficient coding, each set of coordinates may be encoded only once even if the same point corresponds to more than one vertex. However, encoding of the same set of coordinates more than once is not necessarily excluded (for example, it may be desirable to reduce the processing resources dedicated to eliminating duplicates).

Another list 1002 is also encoded that includes, for each of the vertices of each of the faces in the mesh, an index identifying the corresponding set of coordinates in the list 1004.

Example embodiments also include an encoding apparatus comprising one or more processors configured to perform the encoding methods described herein.

Some embodiments further include encoding a first data structure, 1006 wherein the first data structure includes an accessor index 1010 identifying the list 1004 and an accessor index 1008 identifying the list 1002.

Some embodiments further include obtaining information indicating, for each vertex of each face in a mesh, a respective second set of coordinates of a second corresponding point in a second UV space, e.g. in a format as shown above or in some other format. A list 1014 is encoded that includes, for each of the second corresponding points in the second UV space, the second set of coordinates of the respective point. A list 1012 is also encoded that includes, for each of the vertices of each of the faces in the mesh, an index identifying the corresponding second set of coordinates in the list 1014.

Some embodiments further include encoding a second data structure 1016, wherein the second data structure includes an accessor index 1020 identifying the list 1014 and an accessor index 1018 identifying the list 1012.

For the sake of clarity, FIG. 11 is provided to illustrate schematically a mapping between vertices of the different faces of mesh 602 (shown separately for the sake of clarity), indices in list 1002, and ultimately coordinates in list 1004. An analogous mapping may also be implemented between those same vertices and the coordinates in list 1014, but for the sake of clarity, only the relationship between lists 1012 and 1014 is drawn explicitly.

### Example Apparatus

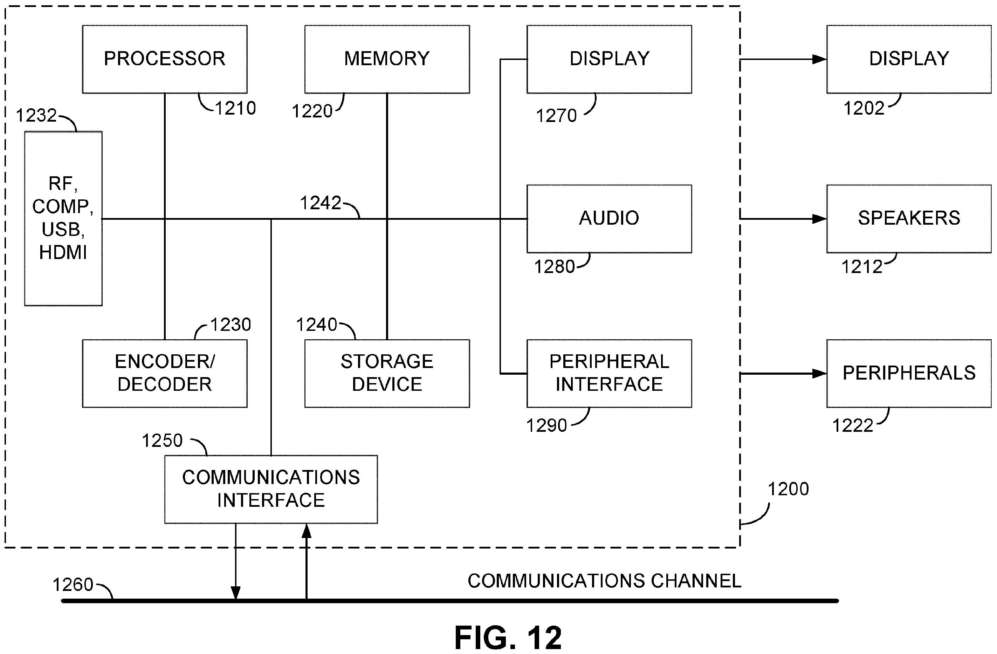

Some embodiments may be implemented on a system of one or more processors as illustrated in FIG. 12. FIG. 12 is a block diagram of an example of a system in which various aspects and embodiments are implemented. System 1200 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1200, singly or in combination, can be embodied in a single integrated circuit (IC), multiple ICs, and/or discrete components. For example, in at least one embodiment, the processing and encoder/decoder elements of system 1200 are distributed across multiple ICs and/or discrete components. In various embodiments, the system 1200 is communicatively coupled to one or more other systems, or other electronic devices, via, for example, a communications bus or through dedicated input and/or output ports. In various embodiments, the system 1200 is configured to implement one or more of the aspects described in this document.

The system 1200 includes at least one processor 1210 configured to execute instructions loaded therein for implementing, for example, the various aspects described in this document. Processor 1210 can include embedded memory, input output interface, and various other circuitries as known in the art. The system 1200 includes at least one memory 1220 (e.g., a volatile memory device, and/or a non-volatile memory device). System 1200 includes a storage device 1240, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1240 can include an internal storage device, an attached storage device (including detachable and non-detachable storage devices), and/or a network accessible storage device, as non-limiting examples.

System 1200 includes an encoder/decoder module 1230 configured, for example, to process data to provide an encoded video or decoded video, and the encoder/decoder module 1230 can include its own processor and memory. The encoder/decoder module 1230 represents module(s) that can be included in a device to perform the encoding and/or decoding functions. As is known, a device can include one or both of the encoding and decoding modules. Additionally, encoder/decoder module 1230 can be implemented as a separate element of system 1200 or can be incorporated within processor 1210 as a combination of hardware and software as known to those skilled in the art.

Program code to be loaded onto processor 1210 or encoder/decoder 1230 to perform the various aspects described in this document can be stored in storage device 1240 and subsequently loaded onto memory 1220 for execution by processor 1210. In accordance with various embodiments, one or more of processor 1210, memory 1220, storage device 1240, and encoder/decoder module 1230 can store one or more of various items during the performance of the processes described in this document. Such stored items can include, but are not limited to, the input scene description file, the decoded scene or portions of the decoded scene, the bitstream, matrices, variables, and intermediate or final results from the processing of equations, formulas, operations, and operational logic.

In some embodiments, memory inside of the processor 1210 and/or the encoder/decoder module 1230 is used to store instructions and to provide working memory for processing that is needed during encoding or decoding. In other embodiments, however, a memory external to the processing device (for example, the processing device can be either the processor 1210 or the encoder/decoder module 1230) is used for one or more of these functions. The external memory can be the memory 1220 and/or the storage device 1240, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1200 can be provided through various input devices as indicated in block 1232. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1232 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1200 to other electronic devices across USB and/or HDMI connections. It is to be understood that various aspects of input processing, for example, Reed-Solomon error correction, can be implemented, for example, within a separate input processing IC or within processor 1210 as necessary. Similarly, aspects of USB or HDMI interface processing can be implemented within separate interface ICs or within processor 1210 as necessary. The demodulated, error corrected, and demultiplexed stream is provided to various processing elements, including, for example, processor 1210, and encoder/decoder 1230 operating in combination with the memory and storage elements to process the datastream as necessary for presentation on an output device.

Various elements of system 1200 can be provided within an integrated housing, Within the integrated housing, the various elements can be interconnected and transmit data therebetween using suitable connection arrangement 1242, for example, an internal bus as known in the art, including the Inter-IC (I2C) bus, wiring, and printed circuit boards.

The system 1200 includes communication interface 1250 that enables communication with other devices via communication channel 1260. The communication interface 1250 can include, but is not limited to, a transceiver configured to transmit and to receive data over communication channel 1260. The communication interface 1250 can include, but is not limited to, a modem or network card and the communication channel 1260 can be implemented, for example, within a wired and/or a wireless medium.

Data is streamed, or otherwise provided, to the system 1200, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1260 and the communications interface 1250 which are adapted for Wi-Fi communications. The communications channel 1260 of these embodiments is typically connected to an access point or router that provides access to external networks including the Internet for allowing streaming applications and other over-the-top communications. Other embodiments provide streamed data to the system 1200 using a set-top box that delivers the data over the HDMI connection of the input block 1232. Still other embodiments provide streamed data to the system 1200 using the RF connection of the input block 1232. As indicated above, various embodiments provide data in a non-streaming manner. Additionally, various embodiments use wireless networks other than Wi-Fi, for example a cellular network or a Bluetooth network.

The system 1200 can provide an output signal to various output devices, including a display 1202, speakers 1212, and other peripheral devices 1222. The display 1202 of various embodiments includes one or more of, for example, a touchscreen display, an organic light-emitting diode (OLED) display, a curved display, and/or a foldable display. The display 1202 can be for a television, a tablet, a laptop, a cell phone (mobile phone), or other device. The display 1202 can also be integrated with other components (for example, as in a smart phone), or separate (for example, an external monitor for a laptop). The other peripheral devices 1222 include, in various examples of embodiments, one or more of a stand-alone digital video disc (or digital versatile disc) (DVR, for both terms), a disk player, a stereo system, and/or a lighting system. Various embodiments use one or more peripheral devices 1222 that provide a function based on the output of the system 1200. For example, a disk player performs the function of playing the output of the system 1200.

In various embodiments, control signals are communicated between the system 1200 and the display 1202, speakers 1212, or other peripheral devices 1222 using signaling such as AV.Link, Consumer Electronics Control (CEC), or other communications protocols that enable device-to-device control with or without user intervention. The output devices can be communicatively coupled to system 1200 via dedicated connections through respective interfaces 1270, 1280, and 1290. Alternatively, the output devices can be connected to system 1200 using the communications channel 1260 via the communications interface 1250. The display 1202 and speakers 1212 can be integrated in a single unit with the other components of system 1200 in an electronic device such as, for example, a television. In various embodiments, the display interface 1270 includes a display driver, such as, for example, a timing controller (T Con) chip.

The display 1202 and speaker 1212 can alternatively be separate from one or more of the other components, for example, if the RF portion of input 1232 is part of a separate set-top box. In various embodiments in which the display 1202 and speakers 1212 are external components, the output signal can be provided via dedicated output connections, including, for example, HDMI ports, USB ports, or COMP outputs.

The embodiments can be carried out by computer software implemented by the processor 1210 or by hardware, or by a combination of hardware and software. As a non-limiting example, the embodiments can be implemented by one or more integrated circuits. The memory 1220 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1210 can be of any type appropriate to the technical environment, and can encompass one or more of microprocessors, general purpose computers, special purpose computers, and processors based on a multi-core architecture, as non-limiting examples.

### Additional Embodiments

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "j", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A decoding method comprising:
obtaining a first list that includes a first index for each vertex of each face in a mesh;
obtaining a second list that includes, for each value of the first indices, a respective first set of coordinates of a first corresponding point in a first UV space;
based on the first list and the second list, determining a first mapping of each of the vertices of each face in the mesh to at least one of the first sets of coordinates in the first UV space; and
rendering the mesh using the first mapping to apply a first texture to the mesh.

2. A decoding apparatus comprising one or more processors configured to perform at least:
obtaining a first list that includes a first index for each vertex of each face in a mesh;
obtaining a second list that includes, for each value of the first indices, a respective first set of coordinates of a first corresponding point in a first UV space;
based on the first list and the second list, determining a first mapping of each of the vertices of each face in the mesh to at least one of the first sets of coordinates in the first UV space; and
rendering the mesh using the first mapping to apply a first texture to the mesh.

3. The method of claim 1 or the apparatus of claim 2, further comprising obtaining a first data structure, wherein the first data structure includes a first accessor index identifying the first list and a second accessor index identifying the second list.

4. The method of claim 1 or claim 3 as it depends from claim 1, or the apparatus of claim 2 or claim 3 as it depends from claim 2, further comprising:
obtaining a third list that includes a second index for each vertex of each face in the mesh;
obtaining a fourth list that includes, for each value of the second indices, a respective second set of coordinates of a second corresponding point in a second UV space; and
based on the third list and the fourth list, determining a second mapping of each of the vertices of each face in the mesh to at least one of the second sets of coordinates in the second UV space;
wherein rendering the mesh includes using the second mapping to apply a second texture to the mesh.

5. The method of claim 4 as it depends from claim 1, or the apparatus of claim 4 as it depends from claim 2, further comprising obtaining a second data structure, wherein the second data structure includes a third accessor index identifying the third list and a fourth accessor index identifying the fourth list.

6. The method of claim 4 or 5 as they depend from claim 1, or the apparatus of claim 4 or 5 as they depend from claim 2, wherein the first texture and the second texture are different types of texture.

7. The method of claims 1 or claims 3-6 as they depend from claim 1, or the apparatus of claim 2 or claims 3-6 as they depend from claim 2, wherein the first texture is a base color texture, a normal texture, or a displacement texture.

8. The method of claims 1 or claims 3-7 as they depend from claim 1, or the apparatus of claim 2 or claims 3-7 as they depend from claim 2, wherein at least two of the first indices in the first list have a same value thereby identifying a same first set of coordinates.

9. An encoding method comprising:
obtaining information indicating, for each vertex of each face in a mesh, a respective first set of coordinates of a first corresponding point in a first UV space;
encoding a first list that includes, for each of the first corresponding points in the first UV space, the first set of coordinates of the respective point; and
encoding a second list that includes, for each of the vertices of each of the faces in the mesh, a first index identifying the corresponding first set of coordinates in the first list.

10. An encoding apparatus comprising one or more processors configured to perform at least:
obtaining information indicating, for each vertex of each face in a mesh, a respective first set of coordinates of a first corresponding point in a first UV space;
encoding a first list that includes, for each of the first corresponding points in the first UV space, the first set of coordinates of the respective point; and
encoding a second list that includes, for each of the vertices of each of the faces in the mesh, a first index identifying the corresponding first set of coordinates in the first list.

11. The method of claim 9, or the apparatus of claim 10, further comprising encoding a first data structure, wherein the first data structure includes a first accessor index identifying the first list and a second accessor index identifying the second list.

12. The method of claim 9 or claim 11 as it depends from claim 9, or the apparatus of claim 10 or claim 11 as it depends from claim 10, further comprising:
obtaining information indicating, for each vertex of each face in a mesh, a respective second set of coordinates of a second corresponding point in a second UV space;
encoding a third list that includes, for each of the second corresponding points in the second UV space, the second set of coordinates of the respective point; and
encoding a fourth list that includes, for each of the vertices of each of the faces in the mesh, a second index identifying the corresponding second set of coordinates in the second list.

13. The method of claim 12 as it depends from claim 9, or the apparatus of claim 12 as it depends from claim 10, further comprising encoding a second data structure, wherein the second data structure includes a third accessor index identifying the third list and a fourth accessor index identifying the fourth list.

14. The method of claim 12 or 13 as they depend from claim 9, or the apparatus of claim 12 or 13 as they depend from claim 10, wherein the first texture and the second texture are different types of texture.

15. The method of claim 9 or claims 11-14 as they depend from claim 9, or the apparatus of claim 10 or claims 11-14 as they depend from claim 10, wherein at least two of the first indices in the second list have a same value thereby identifying a same first set of coordinates.
